(19) Europäisches Patentamt
European Patent Office
Office européen des brevets

(11) Veröffentlichungsnummer: **0 371 420 B1**

(12) **EUROPÄISCHE PATENTSCHRIFT**

(45) Veröffentlichungstag der Patentschrift: **30.08.95**

(51) Int. Cl.⁶: **C04B  35/58**

(21) Anmeldenummer: **89121810.9**

(22) Anmeldetag: **25.11.89**

(54) **Siliciumnitridkeramik mit granatfreier devitrifizierter intergranularer Glasphase und Verfahren zu ihrer Herstellung.**

(30) Priorität: **29.11.88 DE 3840173**

(43) Veröffentlichungstag der Anmeldung:
**06.06.90 Patentblatt  90/23**

(45) Bekanntmachung des Hinweises auf die Patenterteilung:
**30.08.95 Patentblatt  95/35**

(84) Benannte Vertragsstaaten:
**DE FR GB SE**

(56) Entgegenhaltungen:
**EP-A- 0 171 444**
**DE-A- 3 617 488**

**JOURNAL OF MATERIALS SCIENCE, Band 22, Dezember 1987, Seiten 4369-4376, London;L.K.L. FALK et al.: "Crystallization of the glassy phase in an Si3N4 material by post-sintering heat treatments"**

**IDEM**

**IDEM**

**WORLD PATENT INDEX LATEST DATABASE, Nr. 83-45360k, Derwent Woche 19, 1983,Der-**

**went Publications Ltd, London, GB; &JP-A-58 055 375**

**CHEMICAL ABSTRACTS, Band 99, Nr. 20, 14. November 1983, Seite 275,Zusammenfassung Nr. 162970n, Columbus, Ohio, US;& JP-A-58 95 657**

(73) Patentinhaber: **HOECHST AKTIENGESELL-SCHAFT**

**D-65926 Frankfurt am Main (DE)**

(72) Erfinder: **Peuckert, Marcellus, Dr.**
**Platanenweg 8**
**D-6238 Hofheim am Taunus (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine granatfreie Siliciumnitridkeramik mit hoher mechanischer Festigkeit sowohl bei niedrigen Temperaturen als auch bei Temperaturen oberhalb 1000 °C.

Keramisches Material auf der Basis von Siliciumnitrid ist wegen seiner hohen mechanischen Festigkeit ein wichtiger Werkstoff für zahlreiche Anwendungen in der Technik und insbesondere im Maschinenbau. Siliciumnitridkeramiken mit hoher Festigkeit bei Raumtemperatur werden im allgemeinen aus $\alpha$-$Si_3N_4$-Pulver unter Verwendung von oxidischen oder nitridischen Sinteradditiven wie beispielsweise Magnesiumoxid, Yttriumoxid, Aluminiumoxid und/oder Aluminiumnitrid durch verschiedenste Verfahren erhalten. Üblicherweise werden nach Mischen und Mahlen der Ausgangskomponenten diese einer Formgebung mittels Pressen, Schlickerguß oder Spritzguß unterworfen und die erhaltene Form gesintert. Sinterverfahren werden üblicherweise in einer Schutzgasatmosphäre, insbesondere unter Stickstoff bei Normal-druck oder erhöhtem Druck bis zu etwa 100 bar oder mittels heißisostatischen Pressens bei Drucken bis in Größenordnungen von 2000 bar und Temperaturen im Bereich von 1750 bis 2000 °C durchgeführt. Der Gehalt an Sinteradditiven beträgt je nach speziellem Verfahren etwa 5 bis 20 Gew.-%. Zahlreiche Kombinationen verschiedenster Sinteradditive wurden bereits im Stand der Technik beschrieben. Insbesondere sei hier auf die Kombination von Siliciumnitrid mit Selten-Erden-Oxiden und Aluminiumoxid, Aluminiumnitrid und Titandioxid verwiesen, die nach dem Sintern in Form einer amorphen, intergranularen Glasphase in der Siliciumnitridkeramik vorliegen.

Aus dieser amorphen Zwischenkornphase können je nach Zusammensetzung kristalline Phasen auskristallisieren, wie beispielsweise bei der Verwendung von Yttriumoxid als Sinterhilfsmittel.

Das US-PS 4 102 698 nennt an dieser Stelle $Y_2SiO_5$ und $Y_2Si_2O_7$.

Weiterhin sind aus dem US-PS 4 388 414 Zwischenkornphasen der Zusammensetzung $Y_4Si_2O_7N_2$, $YSiO_2N$ oder $Y_{10}Si_7O_{23}N_4$ bekannt, wodurch die Oxidationsbeständigkeit und in geringem Maße auch die Hochtemperaturfestigkeit verbessert werden kann. Bei Zusatz von Aluminiumoxid können auch $Y_3Al_5O_{12}$ - (JP 58/55 375 A2) und $Y_4Al_2O_9$ prinzipiell ebenfalls auskristallisieren, da sie im quinquinären Phasensystem Si-Al-Y-O-N vorkommen. Unabhängig von einer Erhöhung der Hochtemperaturfestigkeit oberhalb von 1000 °C durch Verringerung des amorphen Phasenanteils und der damit einhergehenden Verringerung des sogenannten Kriechens sind bisher keine Erkenntnisse bezüglich der Festigkeitssteigerung infolge der Kristallisation spezifischer Phasen bekannt.

Aus Ceram. Int. 13 (1987) S. 215 ist bekannt, daß allgemein die Kristallisation eine Erniedrigung der Festigkeiten zwischen Raumtemperatur und etwa 900 °C bewirkt.

Die japanische Patentanmeldung JP-A-58 055375 offenbart ein Verfahren zur Herstellung einer Siliziumnitrid-Keramik, bei dem Siliziumnitrid, Yttriumoxid und Aluminiumoxid gemischt, verformt und anschließend in einer Stickstoff-Atmosphäre bei 1750-2100°C gesintert werden. Nach dem Sinterverfahren wird eine thermische Nachbehandlung in einer Stickstoff- Atmosphäre, bei 1400-1500°C, für 50 bis 300 Stunden durchgeführt. Die dadurch hergestellte $Si_3N_4$-Keramik enthält Yttrium-Aluminium-Granatkristalle, aber kein Titaniumnitrid.

Demgegenüber bestand die Aufgabe der vorliegenden Erfindung in der Bereitstellung einer granatfreie Siliciumnitridkeramik von hoher Festigkeit sowohl bei niedrigen Temperaturen als auch bei Temperaturen oberhalb von 1000 °C sowie in der Bereitstellung eines Verfahrens zur Herstellung derartiger Keramiken.

In Siliciumnitridkeramiken, die unter Zusatz von 3 bis 6 Gew.-% $Y_2O_3$ und gegebenenfalls bis zu 4 Gew.-% Aluminiumoxid als Sinterhilfsmittel hergestellt werden, entsteht durch thermische Nachbehandlung des gesinterten Körpers eine kristalline Yttrium-haltige Phase aus der intergranularen Glasphase. Diese Devitrifikation bewirkt eine signifikante Erhöhung der mechanischen Festigkeit sowohl bei Raumtemperatur als auch bei Temperaturen oberhalb 1000 °C. Die so hergestellte, neuartige Siliciumnitridkeramik besteht aus wenigstens 90 Gew.-% $\beta$-Siliciumnitrid und höchstens 10 Gew.-% der neuartigen, Yttrium-haltigen, kristallinen Phase und gegebenenfalls einem Rest amorpher, intergranularer Glasphase.

Die Yttrium-haltige kristalline Phase wurde durch Röntgenbeugung mit Cu-K$\alpha$-Strahlung charakterisiert. Folgende d-Werte wurden gemessen: 4,69 Å; 4,05 Å; 3,48 Å; 3,20 Å; 3,06 Å; 2,81 Å; 2,40 Å; 2,07 Å; 2,03 Å und 1,87 Å. Zusätzliche d-Werte von Röntgenbeugungsreflexen mit geringerer Intensität, von Reflexen bei größeren Beugungswinkeln, d.h. kleineren d-Werten oder von Reflexen, die von den Reflexen des $\beta$-$Si_3N_4$ überlagert sind, wurden hierbei nicht berücksichtigt. Die Fehlergrenze der d-Werte beträgt etwa ± 0,01 Å. Der Röntgenbeugungsreflex mit der höchsten Intensität hat den d-Wert 3,06 Å.

Figur I gibt das Röntgenbeugungsdiagramm einer Siliciumnitridkeramik mit der darin enthaltenen Yttrium-haltigen, kristallinen Phase (o) wieder. Linien, die auf $\beta$-$Si_3N_4$ zurückgehen, sind durch (x) gekennzeichnet. In beiden Figuren bezieht sich die oberste Zahlenreihe der Abszisse auf den $2\theta$-Wert [°], die unterste auf den d-Wert [$10^{-8}$ cm].

Die kristalline Phase enthält Yttrium, Silicium, Sauerstoff und gegebenenfalls Stickstoff. Obwohl es bisher nicht beobachtet wurde, ist es jedoch durchaus anzunehmen, daß die Struktur der erfindungsgemäßen Phase auch von anderen Seltene-Erden als dem Yttrium oder von Mischungen mehrerer Seltene-Erden gebildet werden kann.

Erfindungsgemäß wurde überraschenderweise gefunden, daß bei Keramiken, die bis zu 10 Gew.-%, vorzugsweise 4 bis 10 Gew.-%, Yttriumoxid und gegebenenfalls bis 4 Gew.-%, vorzugsweise 2 bis 3 Gew.-%, Aluminiumoxid aufweisen, durch einen weiteren Zusatz von Titandioxid im Bereich von 0,5 bis 5 Gew.-% die Kristallisation der erfindungsgemäßen Yttrium-haltigen Phase bei der thermischen Nachbehandlung unterstützt wird. Der Gehalt an Titandioxid ist innerhalb der genannten Grenzen nicht als kritisch anzusehen.

Ohne Zusatz von Titandioxid kristallisieren bei der Herstellung einer Keramik mit ca. 10 Gew.-% Yttriumoxid und einer thermischen Nachbehandlung Granat, d.h. $Y_3Al_5O_{12}$, und $Y_2Si_2O_7$ aus, was jedoch einen negativen Einfluß auf die mechanische Festigkeit hat.

Weiterhin wurde erfindungsgemäß gefunden, daß die mechanische Festigkeit der Siliciumnitridkeramik noch weiter verbessert werden kann, wenn neben Yttriumoxid als zusätzliches Sinterhilfsmittel Aluminiumtitanat ($Al_2TiO_5$) dem Siliciumnitrid bei der Herstellung zugesetzt wird. Derartige erfindungsgemäße Siliciumnitridkeramiken bestehen bei der Verwendung von Titandioxid oder Aluminiumtitanat aus wenigstens 85 Gew.-% $\beta$-Silicium-nitrid, bis zu 15 Gew.-% der neuartigen, Yttrium-haltigen kristallinen Phase sowie gegebenenfalls aus bis 5 Gew.-% Titannitrid (TiN) und einem Rest amorpher, intergranularer Glasphase, wobei dieser Rest auch gleich null sein kann.

Figur II zeigt ein Röntgenbeugungsdiagramm einer erfindungsgemäßen Siliciumnitridkeramik. Linien der Yttrium-haltigen kristallinen Phase sind durch (o), Linien von $\beta$-$Si_3N_4$ durch (X) und Linien von TiN durch (Ø) gekennzeichnet.

Die Herstellung der erfindungsgemäßen Siliciumnitridkeramiken erfolgt nach im Stand der Technik üblichen Verfahren, d.h. durch intensives Mischen oder Mahlen der Ausgangskomponenten in einer Attritormühle, Ringspaltkugelmühle oder einer ähnlichen Vorrichtung. Hierbei werden $\alpha$-$Si_3N_4$, $Y_2O_3$ oder einem $Y_2O_3$-Vorläufer, wobei der Anteil des Gemisches 4 bis 10 Gew.-% $Y_2O_3$ beträgt, sowie 0-4 Gew.-% $Al_2O_3$ und 0,5-5 Gew.-% $TiO_2$ miteinander vermahlen und die so vorbereitete und im Falle einer Naßmahlung anschließend getrocknete, homogene Pulvermischung nach bekannten Verfahren des einachsialen oder isostatischen Pressens, des Schlickergießens, Schlickerdruckgießens, Spritzgießens, Bandgießens oder anderen Formgebungsverfahren in einen porösen Grünkörper überführt. Der so geformte Grünkörper wird erfindungsgemäß vorzugsweise anschließend bei Temperaturen im Bereich von 1750 bis 2000 °C in einer Inertgasatmosphäre gesintert. Der Druck der Inertgasatmosphäre beträgt vorzugsweise 0,1 bis 200 MPa. Als Inertgas wird vorzugsweise Stickstoff verwendet. Übliche Sinterzeiten liegen im Bereich von 30 min bis 5 h.

Es wurde weiterhin gefunden, daß zur Herstellung der erfindungsgemäßen Siliciumnitridkeramiken nach dem Sintern eine thermische Nachbehandlung erfolgen muß. Diese thermische Nachbehandlung geschieht vorteilhafterweise unter Normaldruck in einer Inertgasatmosphäre bei 1200 bis 1500 °C. Als Inertgas wird vorzugsweise Stickstoff und/oder Argon eingesetzt. Die Dauer der Nachbehandlung beträgt erfindungsgemäß 10 oder mehr Stunden. Während dieser thermischen Nachbehandlung kristallisieren die kristallinen Sekundärphasen aus der amorphen intergranularen Glasphase aus.

Titandioxid wandelt sich beim Sintern und der thermischen Nachbehandlung zu Titannitrid um und fördert somit die Kristallisation der Yttrium-haltigen Phase. Ohne Zusatz von Titandioxid kristallisieren bei der Nachbehandlung und bei den genannten hohen Yttriumoxid- und Aluminiumoxid-Mengen Granat und $Y_2Si_2O_7$. Anstelle von Yttriumoxid, Aluminiumoxid und Titandioxid können auch aliquote Mengen anderer Yttrium-, Aluminium- und Titan-Verbindungen, welche sich bei erhöhter Temperatur zu den Oxiden umsetzen, eingesetzt werden. Insbesondere sind an dieser Stelle die Nitrate, Carbonate, Oxalate und Acetate der genannten Metalle zu nennen.

In einer bevorzugten Verfahrensvariante wurde gefunden, daß anstelle einer mechanischen Mischung von $Al_2O_3$-Pulver mit $TiO_2$-Pulver ein homogenes Pulver der kristallinen Verbindung Aluminiumtitanat ($Al_2TiO_5$) als Sinteradditiv mit oder ohne zusätzlichem Aluminiumoxid oder Titanoxid eingesetzt werden kann. Demgemäß wird Aluminiumtitanat zur Herstellung der erfindungsgemäßen Keramiken vorzugsweise in Mengen von bis zu 10 Gew.-%, insbesondere Mengen bis zu 7 Gew.-%, eingesetzt. Darüber hinaus ist Aluminiumtitanat allein oder in Kombination mit anderen Sinterhilfsmitteln als hervorragendes Sinteradditiv für Siliciumnitridkeramiken verwendbar. Eine derartige Siliciumnitridkeramik weist als typische Rohstoffzusammensetzung etwa 86 Gew.-% $\alpha$-Siliciumnitrid, etwa 10 Gew.-% Y-Oxid-Pulver und etwa 4 Gew.-% Aluminiumtitanat-Pulver auf. Davon abweichende Gewichtsverhältnisse sind durchaus Bestandteil der vorliegenden Erfindung. Der Einsatz von Aluminiumtitanat als Sinteradditiv führt bereits bei der Standardherstellung ohne thermische Nachbehandlung zu gegenüber einer mit Aluminiumoxid- und Titandioxid-Pulver hergestellten Keramik verbesserten mechanischen Eigenschaften.

Die hohen mechanischen Festigkeiten, die die erfindungsgemäßen Siliciumnitridkeramiken aufweisen, machen diese besonders geeignet für Anwendungen im Maschinenbau. Mit Hilfe der beschriebenen Verfahren lassen sich aus den Keramiken hochfeste Bauteile herstellen, insbesondere für Anwendungen bei Temperaturen bis zu 1500 °C in Verbrennungsmotoren als Turboladerrotoren, Kolbenböden, Zylinderkopfplatten, Ventilteller, Ventilführungen, Kipphebel, Glühkerzen, Vorbrennkammern, sowie in Bauteilen für Gasturbinen und vielen weiteren Anwendungen, auch außerhalb des Bereichs der Verbrennungsmotoren wie beispielsweise in Kugellagern sowie als Düsen und Schneidkeramiken.

**Beispiele**

Vergleichs-Beispiele 1 bis 5:

Pulver von $\alpha$-$Si_3N_4$ (mittlere Korngröße 0,5 $\mu$m; 95 % $\alpha$-/ 5 % $\beta$-Modifikation; 2,5 % $SiO_2$-Gehalt), $Y_2O_3$-Pulver (mittlere Korngröße 1,4 $\mu$m) und $Al_2O_3$-Pulver (mittlere Korngröße 0,5 $\mu$m) in den in Tabelle 1 angegebenen Ansatzmengen wurden in Isopropanol intensiv gemischt und in einer Attritormühle mit ®Stemalox-Mahlkugeln bestehend aus 85 % $Al_2O_3$ und 12 - 13 % $SiO_2$ (Fa. Hoechst CeramTec AG) naß desagglomeriert und gemahlen. Nach dem Trocknen des Schlickers im Rotationsverdampfer wurde das so aufbereitete Pulver in einer Siliconmatrize isostatisch zu einem Grünkörper etwa der Größe 60 x 15 x 10 $mm^3$ bei 300 MPa Druck gepreßt. Dieser Grünkörper wurde in 0,1 MPa $N_2$-Druck in 1,5 h auf 1800 °C aufgeheizt, während 1 h isotherm bei 1800 °C gesintert und dann während etwa 3 h auf Raumtemperatur abgekühlt. Aus dem gesinterten Keramikkörper wurden 4,5 x 3,5 x 45 $mm^3$ Prüfstäbchen mit einer Diamantsäge gesägt, poliert und im 4-Punkt-Biegebruchversuch in einem 20/40 mm Auflager bezüglich ihrer Festigkeit bei Raumtemperatur und bei 1200 °C in Luft geprüft. Die Zusammensetzungen der Pulvermischungen und die erhaltenen Festigkeitswerte sind in Tabelle 1 zusammengefaßt.

Beispiel 6:

Die Herstellung der Keramik und die Festigkeitsprüfung erfolgten wie in den Beispielen 1 bis 5. Abweichend von den Beispielen 1 bis 5 wurde jedoch folgender Pulveransatz verwendet: 85,9 % $\alpha$-$Si_3N_4$-; 10,0 % $Y_2O_3$-; 2,3 % $Al_2O_3$- und 1,8 % $TiO_2$-Pulver. Die Röntgenbeugungsanalyse ergab, daß neben $\beta$-$Si_3N_4$ auch TiN in der Keramik vorlag. Die Festigkeitsdaten sind in Tabelle 1 zusammengefaßt.

Beispiel 7:

Die Herstellung der Keramik und die Festigkeitsprüfung erfolgten wie in den Beispielen 1 bis 5. Abweichend von den Beispielen 1 bis 5 wurde jedoch folgender Pulveransatz benutzt: 85,9 % $\alpha$-$Si_3N_4$-; 10,0 % $Y_2O_3$- und 4,1 % $Al_2TiO_5$-Pulver. Die Röntgenbeugungsanalyse ergab, daß neben $\beta$-$Si_3N_4$ auch TiN in der Keramik vorlag. Die Festigkeitsdaten sind in Tabelle 1 zusammengefaßt.

Vergleichs beispiele 8 bis 12 und Beispiele 13 und 14

Ein Siliciumnitridkeramikkörper, der jeweils entsprechend einem der Beispiele 1 bis 7 hergestellt wurde, wurde einer thermischen Nachbehandlung in 0,1 MPa $N_2$-Atmosphäre unterzogen. Bei dieser Nachbehandlung wurde der Körper in 1 h auf 1350 °C aufgeheizt, 24 h isotherm bei 1350 °C gehalten und anschließend während 3 h wieder auf Raumtemperatur abgekühlt. Nach dem Abkühlen wurde der Keramikkörper zu 4,5 x 3,5 x 45 $mm^3$ Prüfstäbchen zersägt und die Festigkeit bei 25 °C und 1200 °C im 4-Punkt-Biegebruchversuch bestimmt. Die erhaltenen Meßwerte sind in Tabelle 2 aufgeführt. Weiterhin sind die mittels Röntgenbeugung identifizierten kristallinen Phasen aufgeführt. Figuren I und II zeigen Röntgenbeugungsdiagramme der Siliciumnitridkeramiken entsprechend den Beispielen 10 und 13.

## T A B E L L E  1

4-Punkt Biegebruchfestigkeiten $\sigma_B$ von Siliciumnitridkeramik, die mit $Y_2O_3$, $Al_2O_3$, $TiO_2$ und/oder $Al_2TiO_5$ als Sinterhilfsmittel, Rest $Si_3N_4$ hergestellt wurden.

| Beispiel Nr. | Ansatz (Gew.-%) | | | $\sigma_B$ 25° C (MPa) | $\sigma_B$ 1200° C (MPa) | Sekundäre kristalline Phasen |
|---|---|---|---|---|---|---|
| | $Y_2O_3$ | $Al_2O_3$ | $TiO_2$ | | | |
| 1 | 5,7 | 1,3 | – | 651 | 342 | – |
| 2 | 4,0 | 3,0 | – | 564 | 303 | – |
| 3 | 4,1 | 1,0 | – | 444 | 255 | – |
| 4 | 2,9 | 2,2 | – | 399 | 325 | – |
| 5 | 10,0 | 2,3 | – | 612 | 333 | – |
| 6 | 10,0 | 2,3 | 1,8 | 633 | – | TiN |
| 7 | 10,0 | 4,1 ($Al_2TiO_5$) | | 728 | – | TiN |

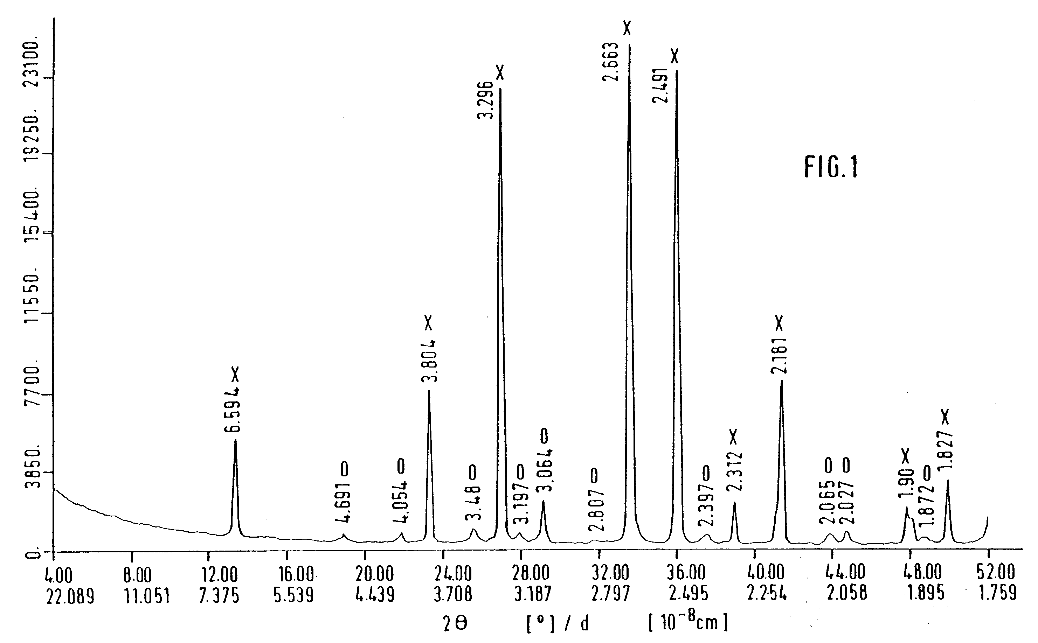

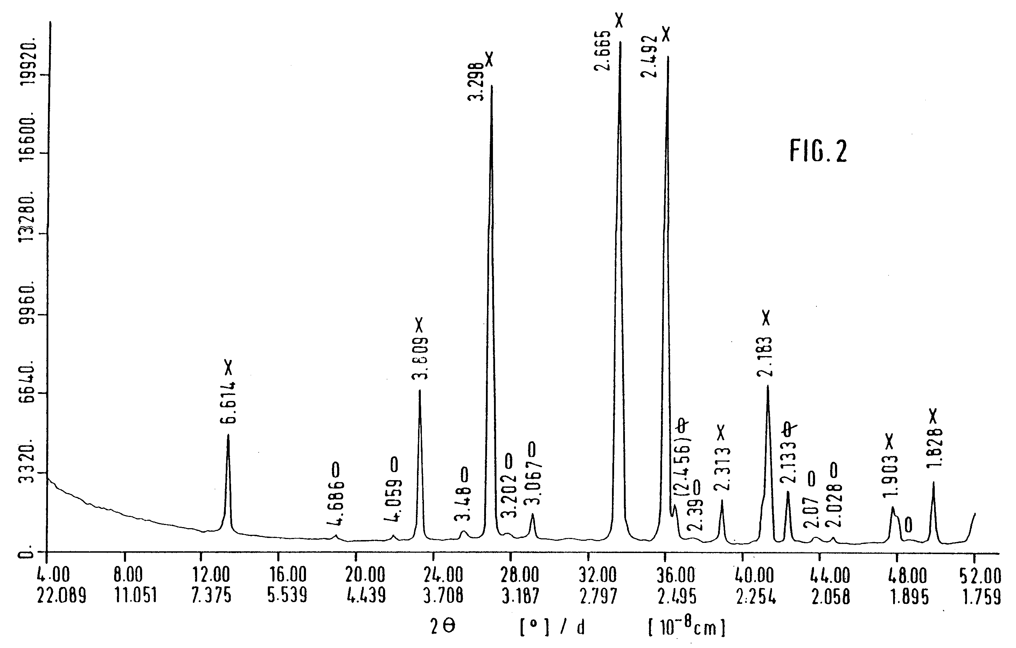

**Patentansprüche**

1. Granatfreie Siliziumnitridkeramik, dadurch gekennzeichnet, daß sie wenigstens 85 Gew.-% $\beta$-Siliziumnitrid, weniger als 15 Gew.-% einer Yttrium-haltigen, kristallinen Phase, die durch die mittels Röntgenbeugung bestimmten d-Werte 4,69 Å; 4,06 Å; 3,48 Å; 3,20 Å; 3,07 Å; 2,39 Å; 2,07 Å; 2,03 Å; und 1,87 Å charakterisiert ist, wobei der intensivste Beugungsreflex den d-Wert 3,06 Å ± 0,01 Å aufweist, und bis 5 Gew.-% Titannitrid sowie einen Rest röntgenamorpher Glasphase enthält, dessen Ansteil ≧ 0 Gew.-% ist.

2.  Siliziumnitridkeramik nach Anspruch 1, dadurch gekennzeichnet, daß die Yttrium-haltige, kristalline Phase neben Yttrium auch Silizium, Sauerstoff und gegebenenfalls auch Stickstoff enthält.

3.  Verfahren zur Herstellung einer Siliziumnitridkeramik nach Anspruch 1, dadurch gekennzeichnet, daß man als Ausgangsstoffe α-Siliciumnitrid und Yttriumoxid oder einen $Y_2O_3$-Vorläufer sowie 0-4 Gew.-% $Al_2O_3$ und 0,5-5 Gew.-% $TiO_2$ intensiv vermischt, wobei der Anteil des Gemisches 4 bis 10 Gew.-% $Y_2O_3$ beträgt, man die erhaltene Pulvermischung zu einem Grünkörper verformt, diesen bei Drucken von 1 bis 100 bar in einer Stickstoff-Atmosphäre und bei Temperaturen von 1750 bis 2000°C sintert und den gesinterten Körper in einer Inertgasatmosphäre bei 1200 bis 1500°C wenigstens 10 Stunden thermisch nachbehandelt.

4.  Verfahren nach Anspruch 3, dadurch gekennzeichnet, daß man den Grünkörper zu einem Keramikkörper in einer Inertgasatmosphäre bei 1300 bis 1400°C sintert und über eine Zeit von 20 bis 30 h thermisch nachbehandelt.

5.  Verfahren nach Anspruch 3 oder 4, dadurch gekennzeichnet, daß man die Formgebung mittels kaltisostatischem oder einachsialem Pressen, Schlickergießen, Spritzgießen oder Bandgießen durchführt.

6.  Verfahren nach Anspruch 3, dadurch gekennzeichnet, daß man anstelle eines äquimolaren Gemisches aus $Al_2O_3$ und $TiO_2$ mindestens teilweise Aluminiumtitanatpulver verwendet.

7.  Verfahren nach Anspruch 6, dadurch gekennzeichnet, daß die Zusammensetzung der keramischen Ausgangsstoffe 4 bis 10 Gew.-% Yttriumpulver oder eine aliquote Menge einer zersetzbaren Y-Verbindung und bis zu 7 Gew.-% Aluminiumtitanatpulver als Sinterhilfsmittel aufweist.

8.  Verwendung der Siliciumnitridkeramik gemäß Anspruch 1 als Bauteil in Verbrennungsmotoren, Gasturbinen, Kugellagern, Düsen und Schneidkeramiken.

9.  Verwendung der Siliciumnitridkeramik nach Anspruch 1 als Turboladerotoren, Kolbenböden, Zylinderkopfplatten, Ventilteller, Ventilführungen, Kipphebel, Glühkerzen und Vorbrennkammern.

**Claims**

1.  A garnet-free silicon nitride ceramic which contains at least 85% by weight of $\beta$-silicon nitride and less than 15% by weight of an yttrium-containing, crystalline phase characterized by the d-values 4.69 Å; 4.06 Å; 3.48 Å; 3.20 Å; 3.07 Å; 2.39 Å; 2.07 Å; 2.03 Å; and 1.87 Å, determined by X-ray diffraction, the most intense diffraction reflection having the d-value 3.06 Å ± 0.01 Å, and which contains up to 5% by weight of titanium nitride and a residue of glass phase amorphous to X-rays, the content of which is ≧ 0% by weight.

2.  A silicon nitride ceramic as claimed in claim 1, wherein the yttrium-containing, crystalline phase contains not only yttrium but also silicon, oxygen and, if appropriate, also nitrogen.

3.  A process for the preparation of a silicon nitride ceramic as claimed in claim 1, which comprises vigorously mixing $\alpha$-silicon nitride and yttrium oxide or a $Y_2O_3$ precursor and also 0 - 4% by weight of $Al_2O_3$ and 0.5 - 5% by weight of $TiO_2$, as starting materials, the content of $Y_2O_3$ in the mixture being 4 to 10% by weight, shaping the resulting powder mixture to give a green body, sintering the latter under pressures of 1 to 100 bar in a nitrogen atmosphere and at temperatures of 1750 to 2000°C and subjecting the sintered body to a thermal aftertreatment in an inert gas atmosphere at 1200 to 1500°C for at least 10 hours.

4.  The process as claimed in claim 3, wherein the green body is sintered in an inert gas atmosphere at 1300 to 1400°C to give a ceramic body and is subjected to a thermal aftertreatment for 20 to 30 h.

5. The process as claimed in claim 3 or 4, wherein the shaping is carried out by means of cold-isostatic or uniaxial compression, slip casting, injection molding or tape casting.

6. The process as claimed in claim 3, wherein, instead of an equimolar mixture of $Al_2O_3$ and $TiO_2$, aluminum titanate powder is used, at least in part.

7. The process as claimed in claim 6, wherein the composition of the ceramic starting materials contains, as sinter aids, 4 to 10% by weight of yttrium powder or an aliquot amount of a decomposable Y compound and up to 7% by weight of aluminum titanate powder.

8. The use of the silicon nitride ceramic as claimed in claim 1 as a component in internal combustion engines, gas turbines, ball bearings, nozzles and cutting ceramics.

9. The use of the silicon nitride ceramic as claimed in claim 1 as turbo-supercharger rotors, piston heads, cylinder-head plates, valve faces, valve guides, rocker arms, heater plugs and precombustion chambers.

**Revendications**

1. Céramique de nitrure de silicium dépourvue de grenat, caractérisée en ce qu'elle présente au moins 85 % en poids de nitrure de $\beta$-silicium, moins de 15 % en poids d'une phase cristalline contenant de l'yttrium, qui est caractérisée par des valeurs d déterminées à l'aide de la diffraction aux rayons X suivantes : 4,69 Å ; 4,06 Å ; 3,48 Å ; 3,20 Å ; 3,07 Å ; 2,39 Å ; 2,07 Å ; 2,03 Å et 1,87 Å, le reflet de diffraction le plus intense présentant la valeur d de 3,06 Å ± 0,01 Å, et jusqu'à 5 % en poids de nitrure de titane ainsi qu'un reste de phase cristalline amorphe selon l'analyse par diffraction aux rayons X, dont le taux est ≧ 0 % en poids.

2. Céramique de nitrure de silicium selon la revendication 1, caractérisée en ce que la phase cristalline contenant de l'yttrium contient au côté de l'yttrium également du silicium, de l'oxygène et éventuellement aussi de l'azote.

3. Procédé pour la préparation d'une céramique de nitrure de silicium selon la revendication 1, caractérisé en ce qu'on mélange intimement en tant que matières de départ le nitrure de $\alpha$-silicium et l'oxyde d'yttrium ou un précurseur de $Y_2O_3$ ainsi que de 0 à 4 % en poids de $Al_2O_3$ et de 0,5 à 5 % en poids de $TiO_2$, le mélange contenant un taux de 4 à 10 % en poids de $Y_2O_3$, on moule le mélange de poudres obtenu pour obtenir un compact vert, on fritte celui-ci sous une pression de 1 à 100 bars sous une atmosphère d'azote et à des températures de 1750 à 2000°C et on soumet le corps fritté à un post-traitement thermique sous une atmosphère de gaz inerte à 1200 à 1500°C pendant au moins 10 heures.

4. Procédé selon la revendication 3, caractérisé en ce qu'on fritte le compact vert pour obtenir un corps céramique sous une atmosphère de gaz inerte à 1300 à 1400°C et on soumet pendant 20 à 30 heures à un post-traitement thermique.

5. Procédé selon la revendication 3 ou 4, caractérisé en ce qu'on met en oeuvre le moulage à l'aide de compression isostatique à froid ou uniaxiale, de coulée en barbotine, de moulage par injection ou de coulée en bande.

6. Procédé selon la revendication 3, caractérisé en ce qu'on utilise au lieu d'un mélange équimolaire de $Al_2O_3$ et de $TiO_2$, au moins en partie, de la poudre de titanate d'aluminium.

7. Procédé selon la revendication 6, caractérisé en ce que la composition des matières de départ céramiques présente de 4 à 10 % en poids de poudre d'yttrium ou une quantité aliquote d'un composé d'yttrium qui se décompose et jusqu'à 7 % en poids de poudre de titanate d'aluminium en tant qu'adjuvant de frittage.

8. Utilisation de la céramique de nitrure de silicium selon la revendication 1, en tant qu'élément de construction dans les moteurs à combustion, turbines à gaz, roulements à billes, tuyères et céramiques de coupe.

9. Utilisation de la céramique de nitrure de silicium selon la revendication 1 en tant que turbocompresseurs à suralimentation, plateaux de piston, plateaux de tête de cylindre, plateaux de ventilation, conduites de ventilation, culbuteurs, bougies à incandescence et chambres de précombustion.

FIG.1

EP 0 371 420 B1

FIG.2